# EUROPEAN PATENT APPLICATION

(11) **EP 4 694 319 A1**
(43) Date of publication of application: **11.02.2026**
(21) Application number: 23935037.4
(22) Date of filing: 21.11.2023
(51) Int. Cl.: H04W 28/24

(54) **DIGITAL TWIN-BASED QOS MANAGEMENT AND CONTROL METHOD, RELATED DEVICE, AND MEDIUM**

(30) Priority: 23.04.2023 CN 202310449644
(71) Applicant: ZTE CORPORATION, Shenzhen, Guangdong 518057 (CN)
(72) Inventor: XUE, Yan, Shenzhen, Guangdong 518057 (CN); XIE, Feng, Shenzhen, Guangdong 518057 (CN)
(74) Representative: Canzler & Bergmeier Patentanwälte Partnerschaft mbB
(86) International application number: PCT/CN2023/132812
(87) International publication number: WO 2024/221869

(57) **Abstract**

The present disclosure provides a digital twin-based quality of service (QoS) management and control method, a digital twin construction device, and a computer readable medium. The QoS management and control method is applied to a QoS management and control twin and comprises: obtaining first QoS information; generating a project-level QoS indicator on the basis of the obtained first QoS information, wherein the project-level QoS indicator is used for guaranteeing the overall QoS of a service; generating a domain-level QoS indicator of a twin network element on the basis of the project-level QoS indicator; querying a task list stored in the twin network element to obtain a task satisfying the domain-level QoS indicator; according to the project-level QoS indicator, the domain-level QoS indicator and a query result of the task list, performing working chain arrangement on the obtained task; and generating second QoS information.

## Description

### TECHNICAL FIELD

The present disclosure relates to, but is not limited to, the field of communications, and specifically relates to a digital twin-based quality of service (QoS) management and control method, a digital twin construction device, and a computer-readable medium.

### BACKGROUND

Under a trend of deep integration of information and communications technology (ICT), future networks will not only serve as pipelines for transmitting bits, but also have a wireless sensing capability, a computation capability, an intelligent service capability, and a network security and trusted tradable capability. In a network, QoS is typically used to provide service provisioning capabilities. Future networks offer integrated services, and the business scenarios thereof may span multiple domains including communication, perception, computing power, intelligence, secure trusted transactions, and the like. Since each domain is a space with certain specialties and independence, a corresponding QoS service guarantee needs to take account of the characteristics of various domains. The 5G traditional QoS mechanism uses a QoS profile to describe QoS characteristics and parameters in the communication domain, but the QoS indicator cannot be shared in other non-communication domains due to significant service differences. Since it is difficult to directly use 5G QoS for characterization of other domain services, QoS indicators specific to each domain have been proposed. The QoS dimensions of various domains cannot be unified, and when a network provides comprehensive services in a multi-domain cooperation mode, many factors may influence the overall QoS effect. No effective solution has been proposed yet for QoS guarantee of multi-domain comprehensive services.

### SUMMARY

To solve the problem that QoS dimensions in various domains cannot be unified, leading to weak service capabilities and cooperation, and poor guarantee effect for QoS comprehensive services in the related art, embodiments of the present disclosure provide a digital twin-based QoS management and control method, a digital twin construction device for QoS management and control, and a computer-readable storage medium.

In a first aspect, an embodiment of the present disclosure provides a digital twin-based QoS management and control method, which is applied to a QoS management and control twin, and includes: acquiring first QoS information; generating a project-level QoS indicator based on the acquired first QoS information, wherein the project-level QoS indicator is configured to provide an overall QoS guarantee for a service; generating a domain-level QoS indicator of a twin network element based on the project-level QoS indicator; querying a task list stored in the twin network element to acquire tasks satisfying the domain-level QoS indicator; performing working chain orchestration on the acquired tasks based on the project-level QoS indicator, the domain-level QoS indicator, and a query result of the task list; and generating second QoS information.

In a second aspect, an embodiment of the present disclosure provides a digital twin construction device for QoS management and control, including: a requirement perception twin module configured to model a QoS requirement derived from a physical network in a digital twin network, to acquire a QoS requirement parameter; a QoS management and control twin module configured to model a QoS management and control twin in the digital twin network, which includes: generating a project-level QoS indicator based on the acquired QoS requirement parameter; generating a domain-level QoS indicator based on the project-level QoS indicator; querying tasks satisfying the domain-level QoS indicator; and performing QoS working chain orchestration on the acquired tasks; and a QoS task execution twin module configured to enable the digital twin network to sequentially execute tasks based on a QoS working chain orchestration result, and feed back a task execution result to the QoS management and control twin.

In a third aspect, an embodiment of the present disclosure provides a computer-readable medium having a computer program stored thereon which, when executed by a processor, causes the method in the first aspect to be implemented.

According to the digital twin-based QoS management and control method, the digital twin construction device for QoS management and control, and the computer-readable medium provided in the present disclosure, modeling and optimization of QoS indicator generation, decomposition and QoS working chain orchestration are performed in a digital twin mode, which provides guarantee for multi-domain comprehensive QoS in the domains of communication, perception, computing power, intelligence, security, and the like, and achieves a better overall service experience. By modeling and managing and controlling QoS based on the digital twin, the QoS indicator is more reasonable, the QoS management and control is finer and more accurate, the QoS process is transparent and visual, and the QoS multi-domain regulation is convenient and flexible, thereby ensuring the overall QoS.

### BRIEF DESCRIPTION OF DRAWINGS

Accompanying drawings are provided for further understanding of the present disclosure and constitute a part of the specification. Hereinafter, these drawings are intended to explain the technical solutions of the present disclosure together with the following specific implementations, but should not be considered as a limitation of the present disclosure. In the drawings:
FIG. 1 is a flowchart of a digital twin-based QoS management and control method according to an embodiment of the present disclosure;
FIG. 2 is a flowchart of exemplary operations for working chain orchestration on the acquired tasks in the embodiment of FIG. 1;
FIG. 3 is a flowchart of exemplary operations after working chain orchestration on the acquired tasks in the embodiment of FIG. 1;
FIG. 4 is a schematic diagram showing an exemplary association of a QoS management and control twin and a physical network according to an embodiment of the present disclosure;
FIG. 5 is a schematic diagram showing an exemplary association of a QoS management and control twin and a twin network element according to an embodiment of the present disclosure;
FIG. 6 is a flowchart of another digital twin-based QoS management and control method according to an embodiment of the present disclosure;
FIG. 7 is a block diagram of components in a digital twin construction device for QoS management and control according to an embodiment of the present disclosure;
FIG. 8 is a block diagram of a computer-readable medium according to an embodiment of the present disclosure; and
FIG. 9 is a schematic diagram showing digital twin-based QoS management and control and task execution according to Example 1.

### DETAIL DESCRIPTION OF EMBODIMENTS

To make those skilled in the art better understand the technical solutions of the present disclosure, exemplary embodiments will be described more sufficiently below with reference to the accompanying drawings, but which may be specifically embodied in different forms and should not be construed as limited to the embodiments set forth herein. These embodiments are provided so that the present disclosure will be thorough and complete, and will fully convey the scope of the present disclosure to those skilled in the art.

As used herein, the term "and/or" includes any and all combinations of one or more of the associated listed items.

The terminology used herein is for the purpose of describing particular exemplary embodiments only, and is not intended to be limiting of the claimed subject matter. As used herein, the singular forms "a", "an" and "the" are intended to include the plural forms as well, unless the context clearly indicates otherwise. It will be further understood that the terms "comprise" and /or "comprising ...", when used in this specification, specify the presence of the stated features, integers, steps, operations, elements, and /or components, but do not preclude the presence or addition of one or more other features, integers, steps, operations, elements, components, and /or groups thereof.

It will be understood that, although the terms "first", "second" and the like may be used herein to describe various elements, components, regions, layers and /or sections, these elements, components, regions, layers and /or sections should not be limited by these terms. These terms are only used to distinguish one element, component, region, layer or section from another element, component, region, layer or section. Therefore, a first element, component, region, node or section discussed below may also be referred to as a second element, component, region, node or section without departing from the teachings disclosed herein. Further, the first element, component, region, node or section in one embodiment may be different from the first element, component, region, node or section in another embodiment.

Unless otherwise defined, all terms (including technical and scientific terms) and features used herein have the same meaning as commonly understood by one of ordinary skill in the art to which the presently disclosed subject matter belongs. It will be further understood that terms, such as those defined in commonly used dictionaries, should be interpreted as having a meaning that is consistent with their meanings in the context of the relevant art and will not be interpreted in an idealized or overly formal sense unless expressly so defined herein.

It should also be understood that the description of features or aspects in each exemplary embodiment should generally be considered applicable to other similar features or aspects in other exemplary embodiments, unless the context clearly dictates otherwise. The various embodiments and implementations of the present disclosure, and the various features in the various embodiments and implementations, may be combined with each other without conflict.

In the related art, there is a problem of weak service capability cooperation across various domains, poor guarantee effect of QoS comprehensive services in a network cross-domain service scenario. To this end, the present disclosure proposes an innovative mechanism for modeling and managing and controlling QoS based on digital twin technology.

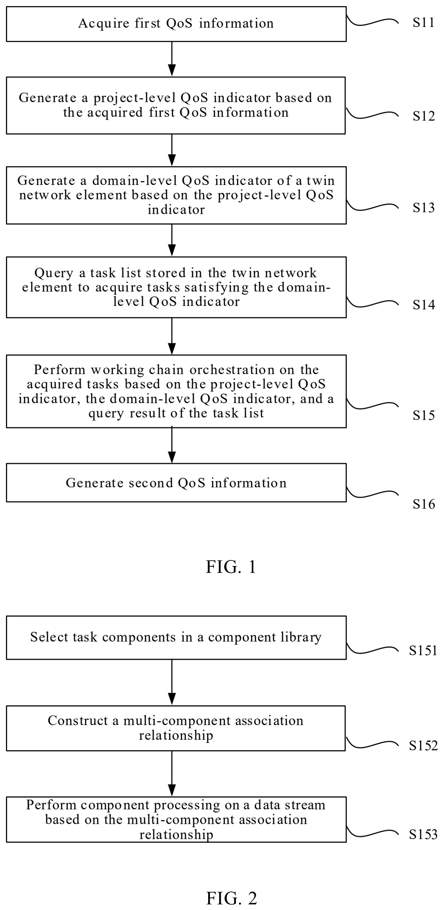

In a first aspect, an embodiment of the present disclosure provides a digital twin-based QoS management and control method, which is applied to a QoS management and control twin. As shown in FIG. 1, the QoS management and control method includes the following operations S11 to S15.

At operation S11, acquiring first QoS information.

In the embodiment of the present disclosure, the QoS management and control twin acquires the first QoS information. The first QoS information will, for example, be used as a reference for a project-level QoS indicator.

A digital twin network (DTN) is composed of a physical entity network and a twin digital network thereof which can perform real-time interactive mapping. A digital twin corresponding to a physical network element may be generated by digital twin modeling. According to different forms of the physical network element, the attributes and behaviors of the network element can be finely modeled in the digital twin network to achieve fine description of the network element modeling, so that the network service process is visual, traceable and predictable.

In an embodiment of the present disclosure, the QoS management and control twin is a digital twin formed by a digital twin network through digital twin modeling. The QoS management and control twin is not specifically limited in the present disclosure. The QoS management and control twin may be, as needed, one of: a QoS management and control twin entity, a QoS management and control twin layer, a QoS management and control twin network element, a QoS management and control twin function, a QoS management and control twin node, a core network twin, an access network twin, a cloud platform twin, a management and orchestration twin, a control plane twin entity, a user plane twin entity, a management plane twin entity, a task management and control twin entity, or a QoS management and control twin agent.

In some optional implementations, the QoS management and control twin is deployed in network element nodes of a network by way of agents.

In some optional implementations, the QoS management and control twin may be a functional entity dedicated to QoS management and control in the digital twin network, such as a functional entity corresponding to a cloud platform function module, a functional entity in a centralized unit (CU), or a functional entity in a distributed unit (DU). The QoS management and control twin may be located in a certain control network element twin of the core network, for example, in a policy control function (PCF) network element or session management function (SMF) network element of the core network. The QoS management and control twin may be located in an access network protocol twin layer, such as one of: a radio resource control (RRC) layer, a service data adaptation protocol (SDAP) layer, a packet data convergence protocol (PDCP) layer, a radio link control (RLC) layer, a medium access control (MAC) layer, or a physical layer.

In some optional implementations, the first QoS information may include at least one of: QoS requirement information from a physical network; network intention information acquired based on an intention network; a QoS requirement parameter generated by performing big data analysis and artificial intelligence (AI) reasoning based on historical data in the digital twin network; capability information of each domain; or QoS modeling data from a physical network.

In some optional implementations, the QoS requirement information or the QoS requirement parameter is a quantitatively characterized network requirement, service requirement, user requirement, network scenario, network environment, or the like.

In some optional implementations, the capability information of each domain includes, but is not limited to, capability information of communication, perception, computing power, AI, security, or other domains, and the capability information includes, but is not limited to, service capability information and task capability information.

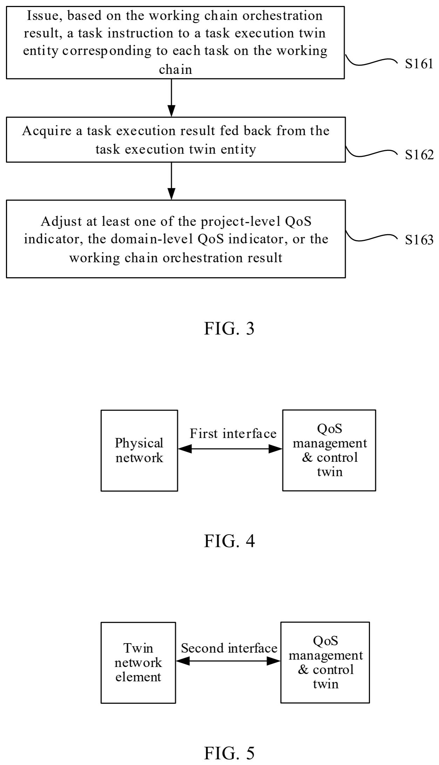

In some optional implementations, as shown in FIG. 4, the QoS management and control twin may perform QoS information interaction with a physical network through a first interface, to acquire the QoS requirement information from the physical network. The first interface is, for example, a virtual/real mapping interface between the QoS management and control twin and the physical network (for example, but not limited to, the twin network element described below).

In some optional implementations, the first QoS information may include, but is not limited to, at least one of: a bandwidth, a data rate, a throughput capacity, latency, jitter, a priority, precision, a resolution, a computation capability, a storage capacity, an intelligence level, determinacy or reliability.

At operation S12, generating a project-level QoS indicator based on the acquired first QoS information, where the project-level QoS indicator is configured to provide an overall QoS guarantee for a service.

In an embodiment of the present disclosure, the QoS management and control twin may generate one or more project-level QoS indicators based on the acquired first QoS information. The project-level QoS indicator is configured to provide an overall QoS guarantee for a service. In other words, the project-level QoS indicator is a composite indicator for the overall service.

By way of example, in a case where the first QoS information includes determinacy, and the QoS deterministic requirement parameter uses 1 to 10 to indicate the determinacy from low to high, the QoS management and control twin may generate two project-level QoS indicators, i.e., ultra-low latency "maximum latency = 1ms" and ultrahigh reliability "reliability = 99.99999%", based on a deterministic requirement parameter 10.

In some optional implementations, the QoS management and control twin may map the acquired first QoS information to a project-level QoS indicator through comprehensive analysis.

In some optional implementations, generating the project-level QoS indicator based on the acquired first QoS information includes: converting the acquired QoS requirement into a combination of multiple project-level QoS indicators, and acquiring an optimal project-level QoS indicator by traversal optimization.

Specifically, the QoS management and control twin may convert the acquired QoS requirement into a combination of multiple sets of project-level QoS indicators, where each set of project-level QoS indicators may contain a different QoS parameter and a different parameter value. By trying different sets of project-level QoS indicators, the QoS management and control twin can select an optimal project-level QoS indicator or project-level QoS indicator combination according to the service requirement of the scenario.

In some optional implementations, after acquiring the first QoS information (operation S11), and before generating the project-level QoS indicator based on the acquired first QoS information (operation S12), the digital twin-based QoS management and control method may further include: modeling a digital twin network QoS requirement using the first QoS information.

At operation S13, generating a domain-level QoS indicator of a twin network element based on the project-level QoS indicator.

In the embodiments of the present disclosure, the QoS management and control twin may generate one or more domain-level QoS indicators for the twin network element based on the generated project-level QoS indicator.

In some optional implementations, according to one classification criterion, the "domain" referred to in the embodiments of the present disclosure may include, but is not limited to, at least one of: a communication domain; a perception domain; a computation domain (computing power domain); an intelligence domain (AI domain); or a security domain. According to another classification criterion, the "domain" may include, but is not limited to, at least one of: a core network domain; an access network domain; a transmission network domain; a terminal domain; a wired domain; or a wireless domain. In addition, different classification criteria may be combined without conflict. For example, the generated domain-level QoS indicators may include a security domain QoS indicator and a wireless domain QoS indicator.

In some optional implementations, the domain-level QoS indicator for the twin network element may be generated based on the project-level QoS indicator by: taking the project-level QoS indicator directly as a domain-level QoS indicator of a single domain; or decomposing the project-level QoS indicator into domain-level QoS indicators of multiple domains.

By way of example, in the case where the project-level QoS indicator is a project-level data transmission rate, the project-level data transmission rate is directly mapped to a data rate of the communication domain, which is a manner of using a project-level QoS indicator directly as a QoS indicator of a single domain. For another example, a project-level QoS deterministic indicator is decomposed into deterministic indicators (e.g., latency, jitter, time window, etc.) of the communication domain and deterministic indicators (e.g., perception accuracy, resolution, positioning accuracy, etc.) of the perception domain, which is a manner of decomposing a project-level QoS indicator into a plurality of domain-level QoS indicators.

In some optional implementations, the project-level QoS indicator may be decomposed into domain-level QoS indicators of multiple domains by at least one of: directly splitting the project-level QoS indicator by domains; decomposing the project-level QoS indicator by using weighting factors for different domains; decomposing the project-level QoS indicator by traversal optimization with multiple combinations; or decomposing the project-level QoS indicator by theoretical formula optimization.

Taking the manner of decomposing the project-level QoS indicators by using weighting factors for different domains as an example, when the project-level QoS indicators are decomposed into multiple domains, a QoS priority indicator is further generated for each domain. For example, in a multi-domain fusion scenario mainly involving communication, the communication domain has a higher QoS priority than other domains. When the project-level QoS indicators are decomposed into multiple domains, the QoS management and control twin may control QoS indicator weightings and QoS priorities of different domains with different weighting factors. By means of the weighting factors, a balanced compromise can be made between various domains. For example, in the AI domain, a longer model training time can achieve a higher accuracy, but also higher AI latency. To ensure the total service latency, the latency in the communication domain should be reduced, which may limit a normal transmission of communication services. By controlling the latency proportions of the AI domain, the communication domain and the computing power domain by the weighting factors, an optimal solution of service latency can be provided. For example, if the project-level QoS indicator is that the total service latency is required to be less than 25 milliseconds (ms), and the AI domain latency requirement takes a larger proportion in the indicator, then the latency requirement may be decomposed into: computation domain latency requirement: 5ms, AI domain latency requirement: 10ms, perception domain latency requirement: 5ms, and communication domain latency requirement: 5ms. For example, if the project-level QoS indicator is that the total service latency is required to be less than 25ms, and the AI domain latency requirement takes a smaller proportion in the indicator, then the latency requirement may be decomposed into: computation domain latency requirement: 5ms, AI domain latency requirement: 5ms, perception domain latency requirement: 5ms, and communication domain latency requirement: 10ms.

In addition, under the condition of decomposing the project-level QoS indicator by traversal optimization with multiple combinations, the QoS management and control twin may perform multiple combinations and configurations of domain-level QoS indicators, priorities and /or weighting factors, and monitor configuration results through a digital twin platform, so that configuration adjustment can be performed, and a decomposition result meeting the project-level QoS indicator can be obtained in an optimization mode.

At operation S14, querying a task list stored in the twin network element to acquire tasks satisfying the domain-level QoS indicator.

In an embodiment of the present disclosure, the QoS management and control twin may query the task list stored in the twin network element to acquire the tasks satisfying the domain-level QoS indicator in each domain.

In an embodiment of the present disclosure, the twin network element storing the task list may include, but is not limited to, at least one of: a domain-level twin entity, a domain-level twin network element, a task execution twin entity, a task execution twin node, a twin base station, a twin terminal, a twin core network, an integrated twin network element with multi-domain capabilities, an intelligent twin network element with integrated communication and computation capabilities, or an intelligent perception twin network element with integrated communication and computation capabilities.

In some optional implementations, a query result of the task list may include, but is not limited to, at least one of: a task name; task-level QoS information; task description information; a task identification (ID); or a task execution twin entity.

In some optional implementations, the QoS management and control twin may search for a suitable task from the task list stored in the twin network element according to the domain-level QoS indicator, and set a task-level QoS indicator for the found task.

In some optional implementations, to perform the searching, the QoS management and control twin may perform information interaction with the twin network element through a second interface, to send a domain-level QoS indicator and task query information to the twin network element, acquire a query result fed back from the twin network element, or acquire the task list stored in the twin network element.

At operation S15, performing working chain orchestration on the acquired tasks based on the project-level QoS indicator, the domain-level QoS indicator, and a query result of the task list.

In some optional implementations, the orchestration of tasks on a working chain may include at least one of: determining a timing relationship of the tasks; determining a cooperation mode of the tasks; determining a collision resolution priority of each task; determining initiation and termination triggering conditions of each task, performing full life cycle management on each task; determining a pipeline for task execution; determining serial execution of tasks; determining parallel execution of tasks; or determining mixed execution of tasks.

In some optional implementations, the working chain orchestration result includes one of: a task name on the working chain, a task QoS indicator on the working chain, a task execution mode on the working chain, an execution timing of each task on the working chain, a relationship of tasks on the working chain, a cooperation mode of tasks on the working chain, a collision resolution priority of each task on the working chain, initiation and termination triggering conditions of each task on the working chain, full life cycle management information of each task on the working chain, a project-level QoS indicator, a domain-level QoS indicator, a task component-level QoS indicator on the working chain, a decomposition mode of a project-level QoS indicator, a decomposition mode from domain-level QoS to task-level QoS, a combination of the project-level QoS indicator and the domain-level QoS indicator, or a combination of working chain orchestrations.

In some optional implementations, performing working chain orchestration on the acquired tasks may include at least one of: selecting task components in a component library; constructing a multi-component association relationship; or performing component processing on a data stream based on the multi-component association relationship.

By way of example, as shown in FIG. 2, performing working chain orchestration on the acquired tasks may include sequentially performing the following operations S151 to S153.

At operation S151, selecting task components in a component library.

At operation S152, constructing a multi-component association relationship.

At operation S153, performing component processing on a data stream based on the multi-component association relationship.

It should be noted that the above working chain orchestration on the acquired tasks is not only suitable for multitask orchestration and coordination in the case of multi-domain comprehensive service guarantee, but also suitable for multitask orchestration and coordination of single-domain services.

In some optional implementations, performing working chain orchestration on the acquired tasks may include: traversing and trying a plurality of working chain orchestration results through the digital twin platform, to obtain an optimal working chain orchestration mode.

In some optional implementations, under the condition that the query result of the task list query includes the task-level QoS information, performing working chain orchestration on the acquired tasks may include: selecting components required for executing the task based on the task-level QoS information; or selecting the components required for executing the task based on the task-level QoS information and component-level QoS information related to the components. In the latter case, by way of example, the QoS management and control twin may select suitable components based on the task-level QoS information, set a component-level QoS indicator for the components, and perform working chain orchestration of the task components based on the component-level QoS indicator.

In some optional implementations, in the case where a task-level QoS indicator is set for the found task, performing working chain orchestration on the acquired tasks may include: performing working chain orchestration of the tasks based on the task-level QoS indicator.

It should be noted that the task-level QoS indicator refers to a QoS indicator corresponding to each task when task selection is performed according to the domain-level QoS indicator. The component-level QoS indicator refers to a QoS indicator corresponding to a proper component selected for completing the task-level QoS in the domain.

It should be noted that different services correspond to different QoS indicators, and the QoS of services cannot be satisfied without providing network resources. However, the network resources are limited, and should be reasonably allocated according to the QoS indicators to make full use of the network resources while saving energy and reducing emissions. In some optional implementations, the working chain orchestration may be implemented by utilizing a tidal effect to assign an early timing and a higher priority to a task with a higher real-time requirement, and assign a later timing and a lower priority to a task with a lower real-time requirement. Examples of dealing with the tidal effect through timing allocation of tasks include: in the daytime when resources are in shortage, real-time tasks, such as voices, videos and real-time computation, can be guaranteed to be executed firstly in the working chain orchestration; while at night when resources are abundant, non-real-time tasks, such as automatic software updating and AI off-line task training, may be performed.

In some optional implementations, to achieve the integrated QoS indicator, the working chain orchestration may be implemented in a multitask cooperation mode. For example, when an AI task performs model training and reasoning, cooperation with a computing power task is desired. For example, when a perception task executes data collection, the data needs to be processed and sorted, where the guarantee from a computing power task is also desired.

In some optional implementations, to achieve the integrated QoS indicator, the working chain orchestration of tasks may be implemented by multiple network elements performing different tasks in a distributed manner. The QoS management and control twin issues the tasks to different twin network elements, and the twin network elements execute the tasks in order according to the requirements of the working chain.

At operation S16, generating second QoS information.

In some optional implementations, the second QoS information is a physical network QoS management and control information, and includes, but is not limited to, at least one of: the project-level QoS indicator; the domain-level QoS indicator; a working chain orchestration result; QoS configuration parameter information; or QoS policy information.

According to the digital twin-based QoS management and control method provided in the embodiments of the present disclosure, modeling and optimization of QoS indicator generation, decomposition and QoS working chain orchestration are performed in a digital twin mode, which provides guarantee for multi-domain comprehensive QoS in the domains of communication, perception, computing power, intelligence, security, and the like, and achieves a better overall service experience. By modeling and managing and controlling QoS based on the digital twin, the QoS indicator is more reasonable, the QoS management and control is finer and more accurate, the QoS process is transparent and visual, and the QoS multi-domain regulation is convenient and flexible, thereby ensuring the overall QoS.

In addition, in some optional implementations, after performing working chain orchestration on the acquired tasks, the QoS management and control twin may further perform operations including at least one of: sending the working chain orchestration result to the twin network element; issuing, based on the working chain orchestration result, a task instruction to a task execution twin entity corresponding to each task on the working chain; acquiring a task execution result fed back from the task execution twin entity; adjusting the project-level QoS indicator; adjusting the domain-level QoS indicator; adjusting the working chain orchestration result; or selecting an optimal working chain orchestration result as the second QoS information.

The task execution twin entity may be a twin network element executing a task, including but not limited to: a communication control twin network element, a computing power control twin network element, a perception control twin network element, an AI control twin network element, or a security control twin network element.

In addition, an interface may be further provided between the QoS management and control twin and the twin network element executing a task (also referred to as "task execution twin entity"). The information transferred from the QoS management and control twin through the interface to the twin network element executing a task includes, but is not limited to: a task ID, and resources provided for a task. The information transferred from the twin network element executing a task through the interface to the QoS management and control twin includes, but is not limited to: a task ID, a task execution state, a task execution result, and resources occupied by task execution. The interface is, for example, a virtual/real mapping interface between the QoS management and control twin and the physical network.

By way of example, as shown in FIG. 3, after completing the working chain orchestration, the QoS management and control twin may perform the following operations S161 to S163.

At operation S161, issuing, based on the working chain orchestration result, a task instruction to a task execution twin entity corresponding to each task on the working chain.

At operation S162, acquiring a task execution result fed back from the task execution twin entity.

At operation S163, adjusting at least one of the project-level QoS indicator, the domain-level QoS indicator, or the working chain orchestration result.

Therefore, the QoS management and control twin can judge whether the task execution result reaches the project-level QoS target and/or whether the real QoS requirement is satisfied. Based on the evaluation of the effect, the QoS management and control twin adjusts the multi-domain QoS composite indicator, the indicator of each domain, the working chain orchestration mode, and the task component orchestration mode.

It should be noted that the above operations S161 to S163 may be repeated as needed, to obtain a reasonable QoS mechanism scheme and policy parameters through iterative loops.

In some optional implementations, after the QoS management and control twin performs working chain orchestration on the acquired tasks, the twin network element may further perform operations including at least one of: receiving a working chain orchestration result from the QoS management and control twin; issuing, based on the working chain orchestration result, a task instruction to a task execution twin entity corresponding to each task on the working chain; performing component orchestration on the tasks on the working chain based on the working chain orchestration result; determining a task execution twin entity based on the working chain orchestration result and the domain-level QoS indicator; informing the task execution twin entity to execute tasks based on the working chain orchestration result; acquiring a task execution result fed back from the task execution twin entity; sending a task execution result fed back from the task execution twin entity to the QoS management and control twin; or receiving an adjusted working chain orchestration result from the QoS management and control twin.

In other words, the task instruction may be issued to the task execution twin entity through the QoS management and control twin, or may be issued to the task execution twin entity through the twin network element, as needed. Correspondingly, the task execution result may be directly fed back to the QoS management and control twin from the task execution twin entity, or may be fed back to the QoS management and control twin from the task execution twin entity through the twin network element.

Since the digital twin network is a virtual mapping of the real physical network, a reasonable QoS mechanism scheme obtained in the digital twin network can be directly applied to the physical network in the above manner. New data generated by the physical network can be used as new input to the digital twin network, so that the QoS mechanism, scheme, policy and parameters of the digital twin network are driven to be more convergent and reasonable.

In some optional implementations, as shown in FIG. 5, the QoS management and control twin may perform information interaction with the twin network element through a second interface. The information interaction includes, but is not limited to: the QoS management and control twin sending task query information to the twin network element; the QoS management and control twin acquiring a task query result fed back from the twin network element; the QoS management and control twin issuing a task execution instruction to the twin network element; or the QoS management and control twin acquiring a task execution result fed back from the twin network element. The second interface is, for example, a virtual/real mapping interface between the QoS management and control twin and a network element in the physical network.

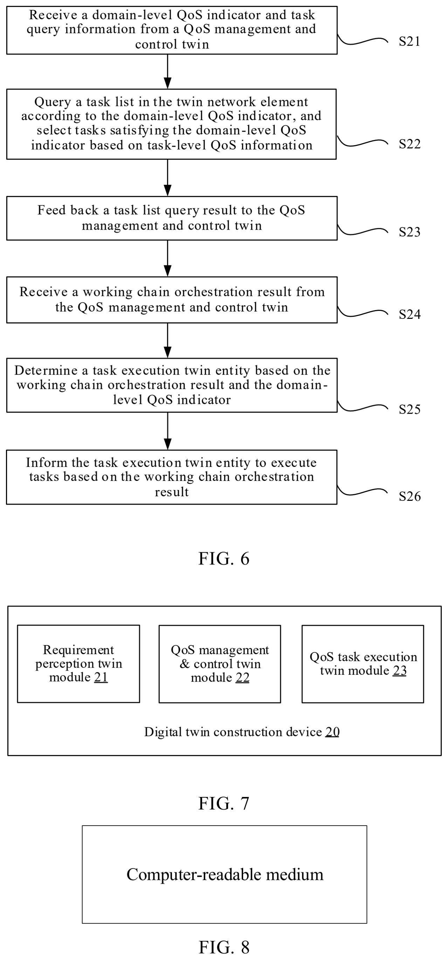

In a second aspect, an embodiment of the present disclosure provides a digital twin-based QoS management and control method. The QoS management and control method is applied to a twin network element, and as shown in FIG. 6, may include the following operations S21 to S27.

At operation S21, receiving a domain-level QoS indicator and task query information from a QoS management and control twin.

At operation S22, querying a task list in the twin network element according to the domain-level QoS indicator, and selecting tasks satisfying the domain-level QoS indicator based on task-level QoS information.

At operation S23, feeding back a task list query result to the QoS management and control twin.

At operation S24, receiving a working chain orchestration result from the QoS management and control twin.

In some optional implementations, the working chain orchestration result includes, but is not limited to, at least one of: a task name on the working chain, a task QoS indicator on the working chain, a task execution mode on the working chain, an execution timing of each task on the working chain, a relationship of tasks on the working chain, a cooperation mode of tasks on the working chain, a collision resolution priority of each task on the working chain, initiation and termination triggering conditions of each task on the working chain, full life cycle management information of each task on the working chain, a project-level QoS indicator, a domain-level QoS indicator, a task component-level QoS indicator on the working chain, a decomposition mode of a project-level QoS indicator, a decomposition mode from domain-level QoS to task-level QoS, a combination of the project-level QoS indicator and the domain-level QoS indicator, or a combination of working chain orchestrations.

At operation S25, determining a task execution twin entity based on the working chain orchestration result and the domain-level QoS indicator.

At operation S26, informing the task execution twin entity to execute tasks based on the working chain orchestration result.

In some optional implementations, the method further includes: performing component orchestration on the tasks on the working chain based on the working chain orchestration result. The component orchestration on the tasks on the working chain may include: selecting components for component orchestration according to the task-level QoS indicators; or selecting components for component orchestration according to the task-level QoS indicators and component-level QoS information related to the components.

As described in the first aspect of the present disclosure, the twin network element includes, but is not limited to, at least one of: a domain-level entity, a domain-level network element, a task execution node, a base station, a terminal, a core network, an integrated network element with multi-domain capabilities, an intelligent network element with integrated communication and computation capabilities, or an intelligent perception network element with integrated communication and computation capabilities. Furthermore, the twin network element is located in a physical network, and interacts with the QoS management and control twin through an interface. The interface is, for example, a virtual/real mapping interface between the QoS management and control twin and the twin network element.

In a third aspect, an embodiment of the present disclosure provides a digital twin construction device 20 for QoS management and control. As shown in FIG. 7, the device includes: a requirement perception twin module 21 configured to model a QoS requirement derived from a physical network in a digital twin network, to acquire first QoS information; a QoS management and control twin module 22 configured to model a QoS management and control twin in the digital twin network, which includes: generating a project-level QoS indicator based on the acquired first QoS information; generating a domain-level QoS indicator based on the project-level QoS indicator; querying tasks satisfying the domain-level QoS indicator; and performing QoS working chain orchestration on the acquired tasks; and a QoS task execution twin module 23 configured to enable the digital twin network to sequentially execute tasks according to a QoS working chain orchestration result, and feed back a task execution result to the QoS management and control twin.

In a fourth aspect, referring to FIG. 8, an embodiment of the present disclosure provides a computer-readable medium storing a computer program thereon which, when executed by a processor, causes the digital twin-based QoS management and control method according to any embodiment of the present disclosure to be implemented.

In a fifth aspect, an embodiment of the present disclosure further provides an electronic device, including: one or more processors; and a memory having one or more programs stored thereon which, when executed by the one or more processors, cause the one or more processors to perform the digital twin-based QoS management and control method described in the first or second aspect.

To present the specific implementation process of the digital twin-based QoS management and control method according to the embodiments of the present application more intuitively, several examples are listed below for explanation, where the examples listed are not intended to limit the protection scope of the embodiments of the present application.

### Example 1

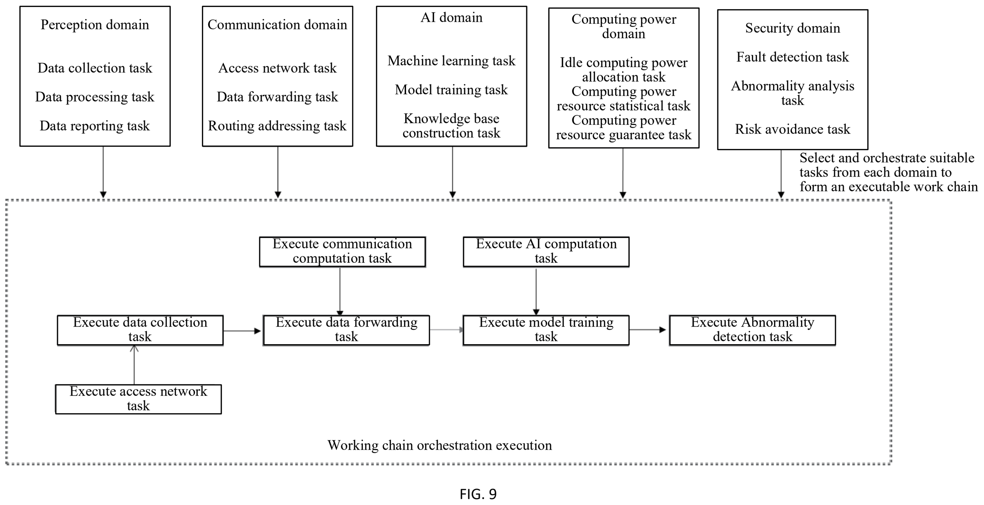

FIG. 9 shows a schematic diagram of digital twin-based QoS management and control and task execution according to this example. In this example, the twin network elements are domain-level entities in perception domain, communication domain, AI domain, computing power domain and security domain. Each twin network element has a task list stored therein. For example, the perception domain twin network element stores therein: a data collection task, a data processing task, a data reporting task, and the like. The communication domain twin network element stores therein: an access network task, a data forwarding task, a routing addressing task, and the like. The AI domain twin network element stores therein: a machine learning task, a model training task, a knowledge base construction task, and the like. The computing power domain (also called "computation domain") twin network element stores therein: an idle computing power allocation task, a computing power resource statistical task, a computing power resource guarantee task, and the like. The security domain twin network element stores therein: a fault detection task, an abnormality analysis task, a risk avoidance task, and the like. In addition, an interface is provided between the QoS management and control twin and each twin network element. The interface is used by the QoS management and control twin to: send task query information to each twin network element; acquire a task query result fed back from each twin network element; send QoS working chain orchestration information to each twin network element; issue a task execution instruction to each twin network element; and /or acquire a task execution result fed back from each twin network element.

After acquiring the first QoS information and generating a project-level QoS indicator (also referred to as "multi-domain QoS composite indicator") based on the acquired first QoS information, the QoS management and control twin decomposes the project-level QoS indicator into domain-level QoS indicators of the perception domain, communication domain, AI domain, computing power domain, and security domain according to the service or task capability information of each domain. Optionally, the capability information of each domain has been configured before the QoS management and control twin decomposes the indicator. Optionally, each domain reports its capability information to the QoS management and control twin before the QoS management and control twin decomposes the indicator.

Subsequently, the QoS management and control twin queries a task list of each domain to select suitable tasks from each domain to be orchestrated into an executable working chain (into a working chain in which tasks are executed in a mixed manner, including in series and in parallel, in FIG. 9).

### Example 2

This example describes QoS determinacy enhancement in an industrial internet scenario achieved with the digital twin-based QoS management and control method provided in the embodiments of the present disclosure.

Industrial internet services relate to a plurality of domains, such as communication, perception, computing power, intelligence (AI) and the like, and the determinacy thereof corresponds to classical QoS indicators embodied in five aspects, i.e., latency, jitter, packet loss rate, bandwidth and reliability. The digital twin-based QoS management and control can fuse and consider the capabilities of various domains integrally, thereby guaranteeing high determinacy.

In this example, the twin network element is, for example, an intelligent perception network element with integrated communication and computation capabilities.

When a service request is initiated in the industrial internet scenario, the QoS management and control twin cooperates with the twin network element to perform the following operations 1 to 4 of digital twin-based QoS management and control.

At operation 1: acquiring QoS requirement information from a physical network as first QoS information, and converting the first QoS information into a QoS deterministic composite (overall) indicator as a project-level QoS indicator.

Specifically, the QoS management and control twin forms a QoS deterministic composite indicator based on the QoS requirement acquired from an industrial internet physical network. If the QoS requirement keeps a high determinacy in a certain period of time, the high certainty requirement is converted into a QoS composite indicator of: a total service latency less than 25ms, a bandwidth of at least 10MHz, and a packet loss rate less than 0.1%.

At operation 2: the QoS deterministic composite indicator is decomposed into domain-level QoS indicators of the network elements.

Based on the capability of each domain, the QoS management and control twin decomposes the QoS deterministic composite indicator into a perception domain deterministic indicator, a communication domain deterministic indicator, a computing power domain deterministic indicator, and an intelligence domain deterministic indicator. For example, to satisfy the composite indicator of a total latency not more than 25ms, the latency is divided into a computation domain latency of 5ms, an AI domain latency of 10ms, a perception domain latency of 5ms, and a communication domain latency of 5ms, and the total latency is 5+10+5+5=25ms. For example, the packet loss rate is equivalent to a packet loss rate of data transmission in the communication domain, and the bandwidth indicator is equivalent to a spectrum resource bandwidth in the communication domain.

At operation 3: querying a deterministic task.

According to the deterministic indicator of each domain, the QoS management and control twin interacts with the twin network element of each domain to query a deterministic task in the domain. For example, the tasks in the perception domain include: collecting environmental data by a sensor, and wirelessly sensing position information of an automated guided vehicle (AGV). The tasks in the communication domain include: network topology planning, data forwarding quality guarantee, information synchronization, optimal routing selection, and the like. The tasks in the security domain include: fault detection and abnormality detection and analysis, abnormality modeling, risk avoidance, and the like. The tasks in the AI domain include: mapping to big data analysis, AI model training and reasoning, knowledge graph management, and the like. The tasks in the computing power domain include: idle computing power allocation, computing power storage, computing power resource guarantee, and the like. To meet the high determinacy of the time period and the latency of each domain in operation 2, a routing optimization and data forwarding task in the communication domain, an idle computing power searching and scheduling task in the computing power domain, a sensor data collection task in the perception domain, and an AI model training and reasoning task in the AI domain are determined through the task query of each domain. The routing optimization and data forwarding task in the communication domain ensures the low latency, low jitter and extremely low packet loss rate of data transmission. The idle computing power searching and scheduling task in the computing power domain can search for hardware equipment meeting the computation and storage requirements, and ensure computing power supply in a specified time period. The sensor data collection task in the perception domain can enable the network to acquire enough data samples in time. The AI model training and reasoning task in the AI domain provides an intelligent service with a latency constraint, and avoids determinacy reduction caused by a prolonged training time.

At operation 4: performing working chain orchestration.

After finding the tasks meeting the domain-level indicator, the QoS management and control twin performs working chain orchestration on the found tasks according to the QoS deterministic composite indicator. For example, the perception task of sensor data collection is firstly performed, then the communication data is forwarded, and then the AI model is trained. For example, the perception task of sensor data collection is firstly performed, then computing power resources are allocated, and then the communi cation data is forwarded, and the AI model is trained.

Through the decomposition of the deterministic indicator and the selection and orchestration of tasks in various domains, the QoS framework mechanism can exert the maximum capability to achieve the optimal deterministic solution.

### Example 3

This example introduces and describes collaborative perception, collaborative communication, and computing power intelligent allocation in a multi-hop scenario implemented by the digital twin-based QoS management and control method provided in the embodiments of the present disclosure.

In a multi-hop scenario such as integrated access and backhaul (IAB), device to device (D2D), and the like, collaborative perception, collaborative communication, and computing power intelligent allocation are needed.

According to the digital twin-based QoS management and control method provided in the embodiments of the present disclosure, the QoS management and control twin can acquire information, such as a network element topological relation and a QoS requirement, according to physical network data and requirements. In working chain orchestration, the QoS management and control twin can perform routing selection, task execution network element selection, and task execution timing judgment based on a comprehensive consideration of the network element topological relation, the QoS requirement, and the QoS indicator. For example, based on the network element topological relation, the QoS requirement, and the QoS indicator, the QoS management and control twin determines a positions of a sensor for executing a perception task and communication nodes from which sensing data is forwarded, and judges when to provide computing power guarantee, so that reasonable tasks and task relations can be formulated to form a working chain.

In the multi-hop scenario with complex topological relations, the digital twin network can be used to find the optimal routing path, task execution node and task cooperating node, thereby improving the efficiency of the QoS task working chain.

Those of ordinary skill in the art will appreciate that all or some operations, function modules/units in the system and apparatus disclosed above may be implemented as software, firmware, hardware, and suitable combinations thereof.

In a hardware implementation, the division between the function modules/units mentioned in the above description does not necessarily correspond to the division of physical components; for example, one physical component may have multiple functions, or one function or operation may be performed cooperatively by several physical components.

Some or all physical components may be implemented as software executed by a processor, such as a central processing unit (CPU), a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to those of ordinary skill in the art, the term computer storage medium includes volatile and nonvolatile, removable and non-removable media implemented in any method or technology for storing information, such as computer-readable instructions, data structures, program modules or other data. The computer storage medium includes, but is not limited to, a random access memory (RAM, more specifically SDRAM, DDR, etc.), a read only memory (ROM), an electrically erasable programmable read-only memory (EEPROM), a flash memory (FLASH), or other disk storage; a compact disk read-only memory (CD-ROM), a digital versatile disk (DVD), or other optical disk storage; a magnetic cassette, a magnetic tape, a magnetic disk memory or any other magnetic storage; or any other medium which can be used to store the desired information and accessed by a computer. Moreover, it is well known to those of ordinary skill in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and /or elements described in connection with a particular embodiment may be used alone or in combination with features, characteristics and /or elements described in connection with another embodiment, unless expressly stated otherwise. It will, therefore, be understood by those skilled in the art that various changes in form and details may be made therein without departing from the scope of the present application as set forth in the appended claims.

## Claims

1. A digital twin-based quality of service, QoS, management and control method, which is applied to a QoS management and control twin, and comprises:
acquiring first QoS information;
generating a project-level QoS indicator based on the acquired first QoS information, wherein the project-level QoS indicator is configured to provide an overall QoS guarantee for a service;
generating a domain-level QoS indicator of a twin network element based on the project-level QoS indicator;
querying a task list stored in the twin network element to acquire tasks satisfying the domain-level QoS indicator;
performing working chain orchestration on the acquired tasks based on the project-level QoS indicator, the domain-level QoS indicator, and a query result of the task list; and
generating second QoS information.

2. The method according to claim 1, further comprising:
sending the second QoS information to a physical network.

3. The method according to claim 1, further comprising:
after acquiring the first QoS information and before generating the project-level QoS indicator, modeling a digital twin network QoS requirement using the first QoS information.

4. The method according to claim 1, wherein the first QoS information comprises at least one of:
QoS requirement information from a physical network;
network intention information acquired based on an intention network;
a QoS requirement parameter generated by performing big data analysis and artificial intelligence reasoning based on historical data in the digital twin network;
capability information of each domain; or
QoS modeling data from a physical network.

5. The method according to claim 1, wherein the second QoS information is physical network QoS management and control information comprising at least one of:
the project-level QoS indicator;
the domain-level QoS indicator;
a working chain orchestration result;
QoS configuration parameter information; or
QoS policy information.

6. The method according to claim 5, wherein the working chain orchestration result comprises one of:
a task name on the working chain, a task QoS indicator on the working chain, a task execution mode on the working chain, an execution timing of each task on the working chain, a relationship of tasks on the working chain, a cooperation mode of tasks on the working chain, a collision resolution priority of each task on the working chain, initiation and termination triggering conditions of each task on the working chain, full life cycle management information of each task on the working chain, a project-level QoS indicator, a domain-level QoS indicator, a task component-level QoS indicator on the working chain, a decomposition mode of a project-level QoS indicator, a decomposition mode from domain-level QoS to task-level QoS, a combination of the project-level QoS indicator and the domain-level QoS indicator, or a combination of working chain orchestrations.

7. The method according to claim 1, wherein generating the project-level QoS indicator based on the acquired first QoS information comprises:
converting the acquired first QoS information into a combination of multiple project-level QoS indicators, and acquiring an optimal project-level QoS indicator by traversal optimization.

8. The method according to claim 1, wherein the orchestration of tasks on a working chain comprises at least one of:
determining a timing relationship of the tasks;
determining a cooperation mode of the tasks;
determining a collision resolution priority of each task;
determining initiation and termination triggering conditions of each task,
performing full life cycle management on each task;
determining a pipeline for task execution;
determining serial execution of tasks;
determining parallel execution of tasks; or determining mixed execution of tasks.

9. The method according to claim 1, wherein a query result of the task list comprises at least one of:
a task name; task-level QoS information; task description information; a task identification; or a task execution twin entity.

10. The method according to claim 9, wherein under the condition that the query result of the task list query comprises the task-level QoS information, performing working chain orchestration on the acquired tasks further comprises:
selecting components required for executing the task based on the task-level QoS information; or
selecting the components required for executing the task based on the task-level QoS information and component-level QoS information related to the components.

11. The method according to claim 1, wherein the domain comprises at least one of:
a communication domain; a perception domain; a computation domain; an intelligence domain; or a security domain.

12. The method according to claim 1, wherein the domain comprises at least one of:
a core network domain; an access network domain; a transmission network domain; a terminal domain; a wired domain; or a wireless domain.

13. The method according to claim 1, wherein after performing working chain orchestration on the acquired tasks, the QoS management and control twin further performs operations comprising at least one of:
sending the working chain orchestration result to the twin network element;
issuing, based on the working chain orchestration result, a task instruction to a task execution twin entity corresponding to each task on the working chain;
acquiring a task execution result fed back from the task execution twin entity;
adjusting the project-level QoS indicator;
adjusting the domain-level QoS indicator;
adjusting the working chain orchestration result; or
selecting an optimal working chain orchestration result as the second QoS information.

14. The method according to claim 1, wherein
generating the domain-level QoS indicator of the twin network element based on the project-level QoS indicator comprises:
taking the project-level QoS indicator directly as a domain-level QoS indicator of a single domain; or
decomposing the project-level QoS indicator into domain-level QoS indicators of multiple domains.

15. The method according to claim 14, wherein
decomposing the project-level QoS indicator into domain-level QoS indicators of multiple domains by at least one of:
directly splitting the project-level QoS indicator by domains;
decomposing the project-level QoS indicator by using weighting factors for different domains;
decomposing the project-level QoS indicator by traversal optimization with multiple combinations; or
decomposing the project-level QoS indicator by theoretical formula optimization.

16. The method according to claim 1, wherein
performing working chain orchestration on the acquired tasks comprises at least one of:
selecting task components in a component library;
constructing a multi-component association relationship; or
performing component processing on a data stream based on the multi-component association relationship.

17. The method according to claim 1, wherein
the QoS management and control twin is a digital twin formed by a digital twin network through digital twin modeling, and comprises one of:
a QoS management and control twin entity, a QoS management and control twin layer, a QoS management and control twin network element, a QoS management and control twin function, a QoS management and control twin node, a core network twin, an access network twin, a cloud platform twin, a management and orchestration twin, a control plane twin entity, a user plane twin entity, a management plane twin entity, a task management and control twin entity, or a QoS management and control twin agent.

18. The method according to any one of claims 1 to 17, wherein the twin network element comprises at least one of:
a domain-level twin entity, a domain-level twin network element, a task execution twin entity, a task execution twin node, a twin base station, a twin terminal, a twin core network, an integrated twin network element with multi-domain capabilities, an intelligent twin network element with integrated communication and computation capabilities, or an intelligent perception twin network element with integrated communication and computation capabilities.

19. The method according to any one of claims 1 to 17, wherein the QoS management and control twin performs QoS information interaction with a physical network through a first interface, and
the QoS information interaction involves at least one of: the first QoS information; or the second QoS information.

20. The method according to any one of claims 1 to 17, wherein the QoS management and control twin performs information interaction with the twin network element through a second interface, and the information interaction comprises at least one of:
the QoS management and control twin sending task query information to the twin network element;
the QoS management and control twin acquiring a task query result fed back from the twin network element;
the QoS management and control twin sending QoS working chain orchestration information to the twin network element;
the QoS management and control twin issuing a task execution instruction to the twin network element; or
the QoS management and control twin acquiring a task execution result fed back from the twin network element.

21. A digital twin construction device for quality of service, QoS, management and control, comprising:
a requirement perception twin module configured to model a QoS requirement derived from a physical network in a digital twin network, to acquire a QoS requirement parameter;
a QoS management and control twin module configured to model a QoS management and control twin in the digital twin network, which comprises: generating a project-level QoS indicator based on the acquired QoS requirement parameter; generating a domain-level QoS indicator based on the project-level QoS indicator; querying tasks satisfying the domain-level QoS indicator; and performing QoS working chain orchestration on the acquired tasks; and
a QoS task execution twin module configured to enable the digital twin network to sequentially execute tasks based on a QoS working chain orchestration result, and feed back a task execution result to the QoS management and control twin.

22. A computer-readable medium storing a computer program thereon which, when executed by a processor, causes the method according to any one of claims 1 to 20 to be implemented.
